# DEMANDE DE BREVET EUROPEEN

(11) **EP 2 884 713 A1**
(43) Date de publication de la demande: **17.06.2015**
(21) Numéro de dépôt: 13306722.3
(22) Date de dépôt: 13.12.2013
(51) Int. Cl.: H04L 29/06, H04L 29/08, H04M 3/42

(54) **Procédé de gestion d'un identifiant public, système, serveur et élément de sécurité correspondant**

(71) Demandeur: Gemalto SA, 92190 Meudon (FR)
(72) Inventeur: Gros, Jean-François, 13705 La Ciotat (FR)

(57) **Abrégé**

L'invention concerne notamment un procédé de gestion d'un identifiant public d'un premier élément de sécurité (64) coopérant avec un premier terminal de télécommunications dans un réseau IMS (61), ledit procédé consistant à :
- Transmettre l'identifiant public à un serveur (60) relié à au moins un réseau de télécommunications ;
- Définir des règles de présence, les règles de présence indiquant quand le premier terminal de télécommunications peut être joint à l'aide de l'identifiant public.

## Description

Le domaine de l'invention est celui de la communication entre terminaux, par exemple mobiles, notamment dans un réseau de télécommunications de type 3G ou LTE (Long Term Evolution), ce réseau étant raccordé à un réseau IMS (IP Multimedia Subsystem).

Un terminal mobile, tel qu'un téléphone, un smartphone ou une tablette tactile comporte classiquement une carte SIM, un UICC ou un e-UICC (circuit soudé remplissant la même fonction qu'un UICC). Cette fonctionnalité SIM ou UICC est liée à l'abonnement de l'utilisateur.

Un élément de sécurité doit pouvoir être administré à distance par l'opérateur auprès duquel l'utilisateur a souscrit son abonnement. Cette administration peut consister en des mises à jour, des vérifications, etc, par exemple réalisées via OTA. Or un tel élément de sécurité n'a pas d'adresse et l'opérateur administre l'élément de sécurité en s'adressant au terminal mobile, par exemple grâce à son IMPU dans un réseau IMS ou à son MSISDN dans un réseau 3G.

Un réseau IMS est un réseau IP connecté à un réseau d'accès, par exemple 3G ou LTE. Le réseau IMS fournit une combinaison dynamique de transport de voix, vidéo, messages, données, etc. pendant la même session. L'IMS utilise le protocole SIP (Session Initiation Protocol) pour établir et contrôler des communications ou des sessions entre des terminaux d'usagers (appelés points terminaux) ou entre des points terminaux et des serveurs d'application. SIP permet à un appelant d'établir une session par commutation de paquets avec une personne appelée (en utilisant SIP User Agents, UAS, installés dans les points terminaux), même si l'appelant ne connaît pas l'adresse IP courante de l'appelé avant d'initier l'appel.

Les spécifications 3GPP IMS actuelles demandent l'utilisation d'une procédure d'authentification des utilisateurs vers le réseau IMS. Cette procédure est décrite dans 3GPP TS 24.229 et 33.203. En utilisant cette approche, une identité de l'utilisateur privé (IMPI) et une ou plusieurs identités publiques des utilisateurs (IMPU) sont alloués à l'utilisateur par l'opérateur. Afin de participer à des sessions multimédia, l'utilisateur doit enregistrer au moins un IMPU sur le réseau. Les identités sont ensuite utilisées par le réseau pour identifier l'utilisateur lors de l'enregistrement et la procédure d'authentification (l'IMPI est utilisé pour localiser les renseignements sur les abonnés, comme les informations d'authentification utilisateur, tandis que le modèle d'imputation précise l'identité d'utilisateur avec lequel l'utilisateur souhaite interagir, et à laquelle des services spécifiques doivent être attachés). L'IMPI et les IMPU sont stockés dans une application appelée IMS Subscriber Identity Module (ISIM) stockée sur une carte à circuit intégré (UICC) dans le terminal de l'utilisateur.

Chaque IMPU est associé à un soi-disant profil de service. Le profil de service est un ensemble de services et de données connexes, qui comprend, entre autres, les critères de filtrage initial qui fournissent une logique de service simple pour l'utilisateur (par exemple, il définit un ensemble de services IMS que l'identité publique IMPU pourra utiliser).

Le réseau d'accès au réseau IMS est par exemple un réseau UMTS, LTE, WLAN et/ou Internet.

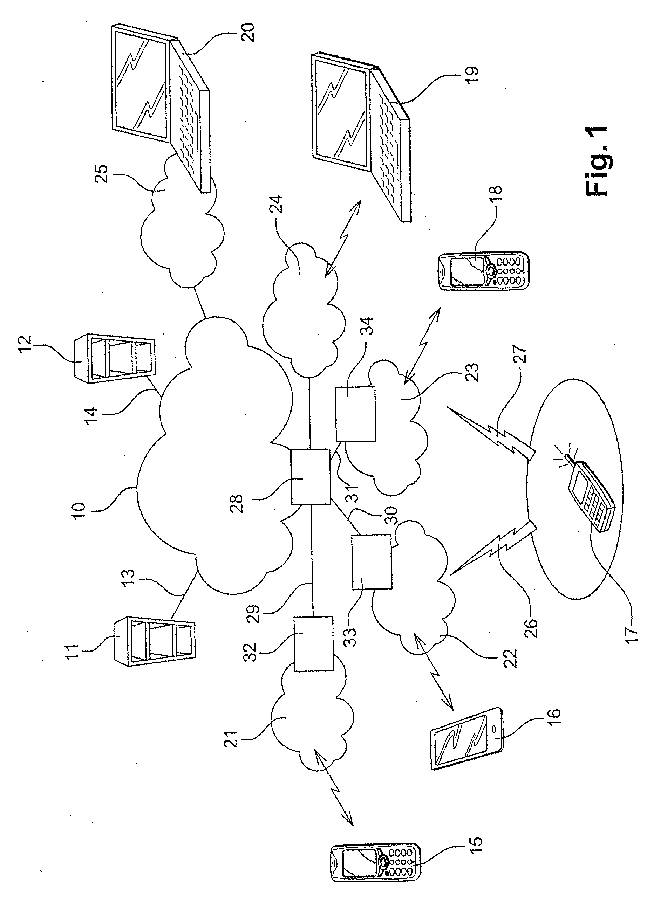

La figure 1 représente un tel réseau IMS connecté à différents réseaux d'accès.

Un réseau IMS 10, tel que défini par 3GPP TS 23.228, est connecté à des serveurs d'application 11, 12 par des liaisons SIP 13, 14. Les serveurs 11 et 12 hébergent des applications IMS représentant des services tels que de la messagerie instantanée, du management de présence (utilisateur présent, absent, en réunion,...), du filtrage d'appel et des sessions temps réel tel que de la voix sur IP (VoIP), de la visioconférence, de la vidéo à la demande, du partage de vidéos, des jeux en réseau ou de télévision via IP.

Des utilisateurs de points terminaux 15 à 20 accèdent à ces services du réseau IMS par l'intermédiaire de réseaux d'accès, tel qu'un réseau UMTS 21, un réseau LTE 22, un réseau 3GPP2 23, un réseau WLAN 24 ou un réseau Internet 25. Le terminal 17 communique par une liaison sans fil 26 avec le réseau LTE 22 et une liaison EV-DO 27 avec le réseau 3GPP2 23.

Le réseau IMS comporte un proxy 28 relié par des liaisons SIP 29 à 31 à des passerelles d'interconnexion, tel qu'une passerelle GGSN (Gateway GPRS Support Node) 32 chargée notamment de fournir une adresse IP au point terminal 15 constitué par un terminal GPRS pendant toute la durée de sa connexion au réseau IMS, une passerelle PDN GW (Packet Data Network Gateway) 33 assurant le même service pour les terminaux LTE 16 et 17, et une passerelle PDSN (Packet Data Serving Node) 34 assurant une connexion via le réseau 3GPP2 23 du terminal 18 de type CDMA 2000.

L'accès aux services du réseau IMS 10 par les utilisateurs des points terminaux 15 à 20 est obtenu après que ces utilisateurs se soient connectés à leurs réseaux d'accès et aient demandé une connexion IP vers ce réseau IMS 10. Les points terminaux peuvent également communiquer entre eux par l'intermédiaire du réseau IMS, par exemple par VoIP.

L'authentification des points terminaux par le réseau IMS 10 est obtenue grâce à une identité privée secrète IMPI, généralement comprise dans une application USIM ou ISIM embarquée dans les points terminaux 15 à 20. Chaque point terminal possède sa propre identité privée. Au cours de la demande d'accès au réseau IMS 10, un point terminal envoie son IMPI au réseau 10 et, s'il y est authentifié (dans un serveur d'enregistrement appelé HSS), des droits d'accès lui sont accordés en fonction de son profil et de son abonnement. Le réseau IMS procède notamment à la facturation de l'utilisateur et au contrôle de la session.

Chaque point terminal 15 à 20 renferme également au moins une adresse publique (donc non secrète) IMPU qui permet à son utilisateur de requérir et recevoir des communications avec d'autres utilisateurs ou d'accéder à un service. Les IMPU se présentent sous la forme d'un SIP URI (Unified Resource Identifier) tel que défini dans les recommandations IETF RFC 3261 et IETF RFC 2396. A titre d'exemple, une adresse IMPU pourrait se présenter sous la forme :
sip : martin@gemalto.com
ou alors sous la forme d'un numéro de téléphone :
sip : 0123456789@gemalto.ims.com.
A contrario, le format d'une adresse privée IMPI est du type : <xyz>@gemalto.com
avec <xyz> étant une chaîne de caractères quelconques, le format d'un IMPI étant dit Network Access Identifier tel que décrit dans la recommandation IETF RFC 2486.

Les IMPU et l'IMPI sont classiquement stockés dans l'application ISIM d'un point terminal. Le point terminal peut comporter un logiciel qui peut enregistrer des IMPU ou alors il est laissé à son utilisateur le droit d'enregistrer des IMPU.

Si le point terminal ne comporte pas d'application ISIM ou USIM, les IMPU et l'IMPI sont stockés dans une mémoire du point terminal. Dans un mode de réalisation classique, l'ISIM est stockée dans un élément sécurisé, par exemple sur une carte à puce UICC extractible du point terminal. Une carte UICC peut porter une ou plusieurs applications ISIM ou USIM. L'élément sécurisé peut également faire partie intégrante du point terminal.

Après ou pendant l'authentification d'un point terminal par reconnaissance de son IMPI et de la vérification des secrets dont il dispose, le point terminal envoie une de ses adresses IMPU au HSS du réseau IMS 10 afin de s'y enregistrer et de bénéficier d'un service IMS.

Le problème que se propose de résoudre la présente invention est de permettre à un utilisateur (premier utilisateur) d'un terminal de télécommunications relié à un réseau IMS de gérer son identifiant public, afin de pouvoir définir des règles de présence indiquant quand son terminal de télécommunications peut communiquer à l'aide de cet identifiant public.

Un autre objectif de l'invention est de permettre de partager son identifiant sur un autre de ces terminaux de télécommunication où un autre utilisateur (deuxième utilisateur) d'un terminal de télécommunications définira lui-même ses règles de présence, ces règles de présence indiquant quand ce deuxième utilisateur peut communiquer à l'aide de cet identifiant public.

A cet effet, la présente invention propose notamment un procédé de gestion d'un identifiant public d'un premier élément de sécurité coopérant avec un premier terminal de télécommunications dans un réseau IMS, le procédé consistant à :
- Transmettre l'identifiant public à un serveur relié à au moins un réseau de télécommunications ;
- Définir des règles de présence, les règles de présence indiquant quand le premier terminal de télécommunications peut être joint à l'aide de l'identifiant public.

Préférentiellement, l'identifiant public du premier élément de sécurité est transmis à un deuxième élément de sécurité d'un deuxième terminal de télécommunications dont l'utilisateur peut, après s'être connecté au serveur, définir des règles de présence, les règles de présence indiquant quand le deuxième terminal de télécommunications peut être joint à l'aide de l'identifiant public.

L'identifiant public est préférentiellement un IMPU.

Dans un mode de mise en oeuvre, les règles de présence sont enregistrées dans une application présente dans au moins un des éléments de sécurité.

Alternativement, les règles de présence sont enregistrées dans le serveur, le serveur activant et désactivant l'identifiant public dans l'un des éléments de sécurité via OTA en fonction des règles de présence définies par l'utilisateur de cet élément de sécurité.

Les règles de présence peuvent également être enregistrées dans le serveur, le serveur activant et désactivant l'identifiant public dans le HSS du réseau d'opérateur en fonction des règles de présence définies par l'utilisateur de l'élément de sécurité.

L'invention concerne également un système de gestion d'un identifiant public d'un premier élément de sécurité coopérant avec un premier terminal de télécommunications dans un réseau IMS, le premier terminal appartenant à un premier utilisateur, le système comprenant un serveur relié à au moins un réseau de télécommunications auquel le premier utilisateur peut transmettre un de ses identifiants publics et y définir des règles de présence, les règles de présence indiquant quand le premier terminal de télécommunications peut être joint à l'aide de l'identifiant public.

Le serveur comprend avantageusement des moyens pour transmettre l'identifiant public du premier élément de sécurité à un deuxième élément de sécurité d'un deuxième terminal de télécommunications dont l'utilisateur peut, après s'être connecté au serveur, définir des règles de présence, les règles de présence indiquant quand le deuxième terminal de télécommunications peut être joint à l'aide de l'identifiant public.

L'invention concerne également un serveur relié à au moins un réseau de télécommunications, le serveur comprenant des moyens pour gérer un identifiant public d'un premier élément de sécurité coopérant avec un premier terminal de télécommunications dans un réseau IMS, le serveur comprenant des moyens pour recevoir l'identifiant public d'un premier terminal de télécommunications.

Le serveur comprend préférentiellement des moyens pour transmettre l'identifiant public du premier élément de sécurité à un deuxième élément de sécurité d'un deuxième terminal de télécommunications dont l'utilisateur peut, après s'être connecté au serveur, définir des règles de présence, les règles de présence indiquant quand le deuxième terminal de télécommunications peut être joint à l'aide de l'identifiant public.

Enfin, l'invention concerne un élément de sécurité d'un terminal de télécommunications, cet élément de sécurité comportant une application comprenant au moins un identifiant public d'un utilisateur pouvant être joint à l'aide de cet identifiant public, l'identifiant public étant associé à des règles de présence pendant lesquelles l'utilisateur peut être joint.

D'autres caractéristiques et avantages de l'invention apparaîtront à la lecture de la description suivante d'un mode de mise en oeuvre préférentiel, donné à titre illustratif et non limitatif, et des dessins annexés dans lesquels :
- la figure 1 représente un réseau IMS connecté à différents réseaux d'accès ;
- la figure 2 représente le principe de la présente invention ;
- la figure 3 représente un système mettant en oeuvre le procédé selon la présente invention.

La figure 1 a été décrite précédemment en référence à l'état de la technique.

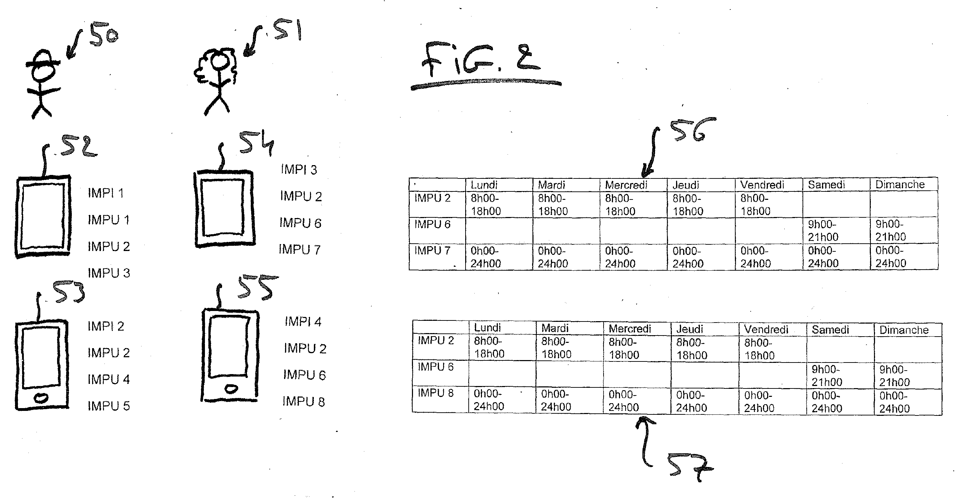

La figure 2 représente le principe de la présente invention.

On considère ici deux utilisateurs : un premier utilisateur 50, que nous appellerons Paul, et une deuxième utilisatrice 51, que nous appellerons Jane. Paul dispose de deux terminaux de télécommunications, une tablette 52 et un smartphone 53. De même, Jane dispose d'une tablette 54 et d'un smartphone 55.

Les terminaux 52 à 55 comprennent chacun un UICC, ou plus généralement un élément sécurisé, leur permettant de s'authentifier auprès d'un réseau d'un opérateur de télécommunications, typiquement un réseau cellulaire.

Chaque UICC renferme une application ISIM ou USIM renfermant chacun un IMPI et plusieurs IMPU. Les IMPI et IMPU peuvent également être enregistrés dans les terminaux eux-mêmes (et non dans les UICC).

Pour Paul, l'UICC du terminal 52 renferme un IMPI 1 et trois IMPU notés IMPU 1, IMPU 2 et IMPU 3. L'UICC du terminal 53 renferme un IMPI 2 et trois IMPU notés IMPU 2, IMPU 4 et IMPU 5.

Le terminal 54 de Jane renferme un IMPI 3 associé à un IMPU 7 et son terminal 55 un IMPI 4 associé à un IMPU 8.

L'invention propose de transmettre de Paul à Jane certains IMPU qui leur permettront d'être joints par des tierces personnes avec la même identité selon des règles horaires définies par eux-mêmes pour chacun de leur terminal de communication. A ce titre, Paul transmet aux UICC de Jane équipant les terminaux 54 et 55, par un procédé qui sera décrit pas la suite, son IMPU 2. Jane peut alors décider quand elle sera joignable sur ses terminaux 54 et 55 grâce à cet IMPU 2. Elle se connecte pour cela, soit à l'aide d'un PC ou à l'aide des terminaux 54 et 55 ou un autre terminal connecté à internet à un serveur dédié qui lui présente les tableaux 56 et 57 qu'il lui faut compléter pour renseigner les horaires où elle sera joignable par IMPU 2 pour tous les jours de la semaine ceci pour chacun de ses appareils de communication qui ont reçus l'IMPU2.

Jane considère par exemple qu'elle souhaite pouvoir communiquer à l'aide de sa tablette 54 du lundi au vendredi de 8h00 à 18h00 et complète le tableau 56 avec ces horaires. Elle opère de même pour le tableau 57 pour son smartphone 55. Elle pourra ainsi communiquer avec tout tiers avec l'IMPU 2 pendant ses horaires de travail. En revanche, elle ne complète pas les cases correspondant au samedi et au dimanche et sera à cet égard injoignable ces jours là sur l'adresse IMPU 2.

Jane a également une amie Marie qui lui a transmis son IMPU 6 et Jane souhaite pouvoir être jointe par cet IMPU 6 de 9h00 à 21 h00 uniquement le samedi et le dimanche. Elle remplit pour cela les cases d'IMPU 6 pour le samedi et le dimanche pour ses terminaux 54 et 55.

Enfin, Marc, le mari de Jane, a deux IMPU, IMPU 7 et IMPU 8 et il reste joignable par l'IMPU 7 sur sa tablette 54 et par l'IMPU 8 sur son smartphone 55 vingt-quatre heures sur vingt-quatre tous les jours de la semaine.

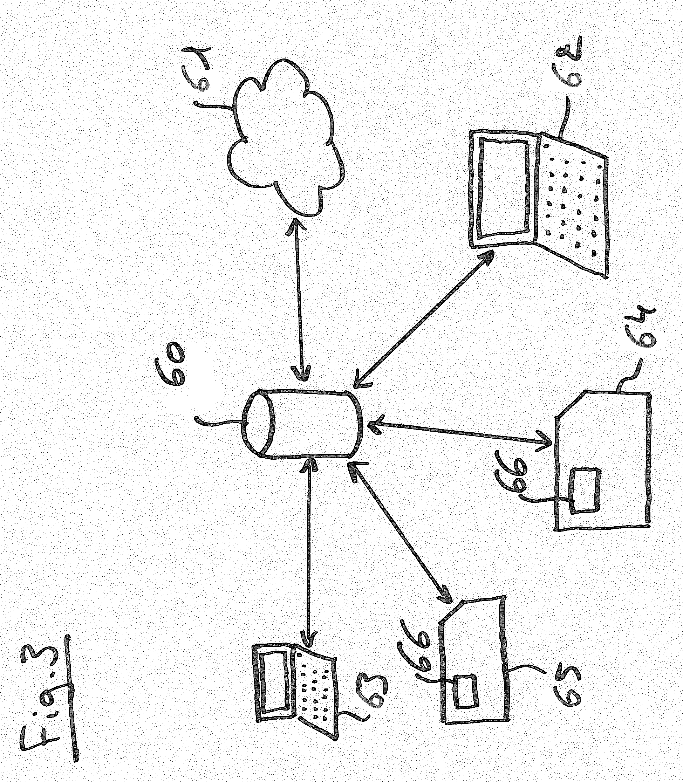

La figure 3 représente un système mettant en oeuvre le procédé selon la présente invention.

Dans ce système, il est proposé de transmettre l'identifiant public d'un premier élément de sécurité à un deuxième élément de sécurité d'un deuxième terminal de télécommunications dont l'utilisateur peut, après s'être connecté à un serveur 60, définir des règles de présence, ces règles de présence indiquant quand le deuxième terminal de télécommunications peut communiquer en utilisant l'identifiant public.

Le système de la figure 3 comporte un serveur 60 dédié à gérer les IMPU précédemment décrits en référence à la figure 2. Le serveur 60 est apte à communiquer avec un réseau IMS 61 relié au HSS d'un réseau d'opérateur. La connexion entre le serveur 60 et le réseau IMS 61 est par exemple une connexion IP. Le serveur 60 est également apte à communiquer avec un ordinateur portable 62 de Paul, avec un ordinateur portable 63 de Jane, ainsi qu'avec les UICC 64 et 65 compris dans les terminaux 52 à 55 de Paul et Jane (seuls deux UICC sont ici représentés). Le réseau IMS peut être relié à plusieurs réseaux d'opérateurs différents.

Le fonctionnement du système est le suivant :
Paul, à l'aide de son ordinateur 62 ou l'un de ses terminaux 52 et 53, se connecte au portail du serveur 60 après authentification, demande un nouveau IMPU. Le serveur consulte le HSS de l'opérateur pour savoir si cet IMPU est déjà associé à un IMPI. Dans la négative, Paul est invité à choisir un IMPU disponible. Une fois en possession de son IMPU (par exemple IMPU 2), Paul envoie une liste des MSISDN (numéros de téléphone), ou autre paramètre qui permet d'identifier un abonnement, des personnes (y compris lui-même) avec lesquelles il désire pouvoir partager son IMPU 2, et notamment celui d'un des terminaux de Jane au serveur 60. Ce dernier transmet alors à l'UICC de Jane correspondant à ce MSISDN, par exemple par SMS, une demande d'accord à Jane. Jane répond par un acquiescement ou un refus. En cas d'acquiescement, l'IMPU 2 de Paul est provisionné dans les UICC de Jane et Paul, dans le HSS et dans le serveur 60.

Ces étapes correspondent à une phase d'enregistrement de l'IMPU 2 de Paul au niveau du réseau et de l'UICC de Jane et de Paul.

Jane peut également transmettre l'IMPU2, reçu de Paul, à une troisième personne. Pour ceci, une notification de demande de permission pourrait être envoyée à Paul, puis s'il accepte, l'IMPU2 est proposé à cette troisième personne.

Dans un mode autre mode de fonctionnement, Paul peut également configurer un IMPU d'un de ses terminaux (appelé premier terminal), par exemple sa tablette 52 (IMPU 1, 2 ou 3), pour que celui-ci ne puisse être contacté que pendant des jours et des heures qu'il a lui-même décidés. Le procédé de l'invention consiste alors à simplement gérer un identifiant public d'un de ses éléments de sécurité en :
- Transmettant un ou plusieurs de ses identifiants publics au serveur 60 relié à son réseau de télécommunications ;
- Définissant des règles de présence, ces règles de présence indiquant quand la tablette 52 peut communiquer à l'aide de ce ou ces identifiants publics.

Paul peut ainsi définir les jours et plages horaires où il sera accessible sur sa tablette 52. Il peut procéder de même avec les IMPU de son smartphone, par exemple pour ne pas être dérangé la nuit par un tiers essayant de le contacter par son IMPU 2, en désactivant IMPU 2 pour son smartphone de 22h00 à 8h00. Les jours et plages horaires où les différents IMPU sont actifs peuvent donc dépendre des choix des deux utilisateurs.

Lorsque le réseau IMS 61 est connecté à plusieurs réseaux d'opérateurs, cela permet de gérer des communications IMS entre abonnés à des opérateurs différents (les HSS des différents opérateurs sont interconnectés entre eux).

L'identifiant public n'est pas nécessairement un IMPU, il peut également s'agir d'un numéro de téléphone ou d'une adresse e-mail.

Les règles de présence sont, dans un premier mode de réalisation, enregistrées dans le serveur 60, ce serveur activant et désactivant l'identifiant public dans l'élément de sécurité via OTA en fonction des règles de présence définies par l'utilisateur de cet élément de sécurité. Ceci nécessite cependant de fréquents échanges via OTA et peut présenter une surcharge pour le réseau.

C'est pourquoi on préférera enregistrer les règles de présence dans une application 66 présente dans les terminaux ou les UICC des terminaux.

Si Paul, à qui appartient l'UICC 64, veut pouvoir être contacté à tout moment par ses différents IMPU, il n'a pas besoin de cette application, Jane ou tout autre interlocuteur pourra le contacter sans restriction imposée par des règles de présence. En revanche, s'il ne veut pas pouvoir être contacté sur un de ses IMPU, l'application doit résider dans l'UICC ou le terminal contenant cet IMPU.

De même, si Jane souhaite ne pas pouvoir être contactée à tout moment, l'application 66 dans résider dans son UICC 65.

L'application 66 peut venir mettre à jour les règles de présence régulièrement, par exemple une fois par semaine, en se connectant au serveur 60. Si celles-ci ont évoluées (par exemple parce que Paul a modifié les jours ou les heures où il peut être joint par son IMPU 2), les règles de présence présentes dans l'UICC comprenant IMPU 2 sont modifiées en conséquence. Après chaque mise à jour, l'application effectue un rafraichissement de l'UICC.

Une autre alternative permettant d'éviter de contacter chaque terminal par OTA lorsqu'une adresse IMPU devient joignable ou injoignable, consiste à enregistrer les règles de présence dans le serveur 60, ce serveur 60 activant et désactivant l'identifiant public dans le ou les HSS du ou des réseaux d'opérateurs en fonction des règles de présence définies par l'utilisateur de l'élément de sécurité.

L'invention concerne également un système de gestion d'un identifiant public d'un premier élément de sécurité 64 coopérant avec un premier terminal de télécommunications 52 dans un réseau IMS, ce premier terminal appartenant à un premier utilisateur 50, le système comprenant un serveur 60 relié à au moins un réseau de télécommunications auquel le premier utilisateur 50 peut transmettre un de ses identifiants publics et y définir des règles de présence, les règles de présence indiquant quand le premier terminal 52 peut être joint à l'aide de cet identifiant public.

Dans ce système, le serveur 60 comprend des moyens pour transmettre l'identifiant public du premier élément de sécurité 64 à un deuxième élément de sécurité 65 d'un deuxième terminal de télécommunications 54, 55 dont l'utilisateur 51 peut, après s'être connecté au serveur 60, définir des règles de présence, ces règles de présence indiquant quand le deuxième terminal de télécommunications 54, 55 peut être joint à l'aide de l'identifiant public du premier élément de sécurité 64.

L'invention concerne également un serveur tel que 60 relié à au moins un réseau de télécommunications, le serveur 60 comprenant des moyens pour gérer un identifiant public d'un premier élément de sécurité 64 coopérant avec un premier terminal de télécommunications 52 dans un réseau IMS, le serveur comprenant des moyens pour :
- recevoir l'identifiant public d'un premier terminal de télécommunications 52 ;
- recevoir des règles de présence, les règles de présence indiquant quand le premier terminal de télécommunications 52 peut communiquer à l'aide de cet identifiant public.

Dans le cas d'un partage d'identifiant entre Paul et Jane, le serveur comprend des moyens pour transmettre l'identifiant public du premier élément de sécurité 64 à un deuxième élément de sécurité 65 d'un deuxième terminal de télécommunications 54, 55 dont l'utilisateur 51 peut, après s'être connecté au serveur 60, définir des règles de présence, ces règles de présence indiquant quand le deuxième terminal de télécommunications 54, 55 peut être joint à l'aide de cet identifiant public.

Enfin, l'invention concerne un élément de sécurité 64 ou 65 d'un terminal de télécommunications, cet élément de sécurité comportant une application comprenant au moins un identifiant public d'un utilisateur pouvant être joint à l'aide de cet identifiant public, l'identifiant public étant associé à des règles de présence pendant lesquelles l'utilisateur peut être joint.

## Revendications

1. Procédé de gestion d'un identifiant public d'un premier élément de sécurité (64) coopérant avec un premier terminal de télécommunications (52) dans un réseau IMS (61), ledit procédé consistant à :
- Transmettre ledit identifiant public à un serveur (60) relié à au moins un réseau de télécommunications ;
- Définir des règles de présence, lesdites règles de présence indiquant quand ledit premier terminal de télécommunications (52) peut être joint à l'aide dudit identifiant public.

2. Procédé selon la revendication 1, **caractérisé en ce que** ledit identifiant public dudit premier élément de sécurité (64) est transmis à un deuxième élément de sécurité (65) d'un deuxième terminal de télécommunications (54, 55) dont l'utilisateur (51) peut, après s'être connecté audit serveur (60), définir des règles de présence, lesdites règles de présence indiquant quand ledit deuxième terminal de télécommunications (54, 55) peut être joint à l'aide dudit identifiant public.

3. Procédé selon l'une des revendications 1 et 2, **caractérisé en ce que** ledit identifiant public est un IMPU.

4. Procédé selon l'une des revendications 1 à 3, **caractérisé en ce que** lesdites règles de présence sont enregistrées dans une application (66) présente dans au moins un desdits éléments de sécurité (64, 65).

5. Procédé selon l'une des revendications 1 à 3, **caractérisé en ce que** lesdites règles de présence sont enregistrées dans ledit serveur (60), ledit serveur (60) activant et désactivant ledit identifiant public dans l'un desdits éléments de sécurité (64, 65) via OTA en fonction des règles de présence définies par l'utilisateur (50, 51) dudit élément de sécurité (64, 65).

6. Procédé selon l'une des revendications 1 à 3, **caractérisé en ce que** lesdites règles de présence sont enregistrées dans ledit serveur (60), ledit serveur (60) activant et désactivant ledit identifiant public dans le HSS dudit réseau d'opérateur en fonction des règles de présence définies par l'utilisateur (50, 51) dudit élément de sécurité (64, 65).

7. Système de gestion d'un identifiant public d'un premier élément de sécurité (64) coopérant avec un premier terminal de télécommunications (52) dans un réseau IMS, ledit premier terminal de télécommunications (52) appartenant à un premier utilisateur (50), ledit système comprenant un serveur (60) relié à au moins un réseau de télécommunications auquel ledit premier utilisateur peut transmettre un de ses identifiants publics et y définir des règles de présence, lesdites règles de présence indiquant quand ledit premier terminal de télécommunications (52) peut être joint à l'aide dudit identifiant public.

8. Système selon la revendication 7, **caractérisé en ce que** ledit serveur (60) comprend des moyens pour transmettre ledit identifiant public dudit premier élément de sécurité (64) à un deuxième élément de sécurité (65) d'un deuxième terminal de télécommunications (54, 55) dont l'utilisateur (51) peut, après s'être connecté audit serveur (60), définir des règles de présence, lesdites règles de présence indiquant quand ledit deuxième terminal de télécommunications (54, 55) peut être joint à l'aide dudit identifiant public.

9. Système selon l'une des revendications 7 et 8, **caractérisé en ce que** ledit identifiant public est un IMPU.

10. Système selon l'une des revendications 7 à 9, **caractérisé en ce que** lesdites règles de présence sont enregistrées dans une application (66) présente dans au moins un desdits éléments de sécurité (64, 65).

11. Système selon l'une des revendications 7 à 9, **caractérisé en ce que** lesdites règles de présence sont enregistrées dans ledit serveur (60), ledit serveur (60) activant et désactivant ledit identifiant public dans l'un desdits éléments de sécurité (64, 65) via OTA en fonction des règles de présence définies par l'utilisateur (50, 51) dudit élément de sécurité (64, 65).

12. Système selon l'une des revendications 7 à 9, **caractérisé en ce que** lesdites règles de présence sont enregistrées dans ledit serveur (60), ledit serveur (60) activant et désactivant ledit identifiant public dans le HSS dudit réseau d'opérateur en fonction des règles de présence définies par l'utilisateur (50, 51) dudit élément de sécurité (64, 65).

13. Serveur (60) relié à au moins un réseau de télécommunications, ledit serveur (60) comprenant des moyens pour gérer un identifiant public d'un premier élément de sécurité (64) coopérant avec un premier terminal de télécommunications (52) dans un réseau IMS, ledit serveur (60) comprenant des moyens pour recevoir ledit identifiant public d'un premier terminal de télécommunications (52, 53).

14. Serveur (60) selon la revendication 13, **caractérisé en ce qu'**il comprend des moyens pour transmettre ledit identifiant public dudit premier élément de sécurité (64) à un deuxième élément de sécurité (65) d'un deuxième terminal de télécommunications (54, 55) dont l'utilisateur (51) peut, après s'être connecté audit serveur (60), définir des règles de présence, lesdites règles de présence indiquant quand ledit deuxième terminal de télécommunications (54, 55) peut être joint à l'aide dudit identifiant public.

15. Elément de sécurité (64, 65) d'un terminal de télécommunications (52, 54), **caractérisé en ce qu'**il comporte une application (66) comprenant au moins un identifiant public d'un utilisateur (50, 51) pouvant être joint à l'aide de cet identifiant public, ledit identifiant public étant associé à des règles de présence pendant lesquelles ledit utilisateur (50, 51) peut être joint.
